Europäisches Patentamt

European Patent Office

Office européen des brevets

(11) Publication number: **0 278 575**
**A2**

## (12) EUROPEAN PATENT APPLICATION

(21) Application number: **88200227.2**

(22) Date of filing: **09.02.88**

(51) Int. Cl.⁴: **F25C 1/22** , A23G 9/22 , B65D 85/78

(30) Priority: **12.02.87 GB 8703196**

(43) Date of publication of application:
**17.08.88 Bulletin 88/33**

(84) Designated Contracting States:
**AT BE CH DE ES FR GB GR IT LI NL SE**

(71) Applicant: **UNILEVER NV**
**Burgemeester s'Jacobplein 1 P.O. Box 760**
**NL-3000 DK Rotterdam(NL)**

(84) **BE CH DE ES FR GR IT LI NL SE AT**

(71) Applicant: **UNILEVER PLC**
**Unilever House Blackfriars P.O. Box 68**
**London EC4P 4BQ(GB)**

(84) **GB**

(72) Inventor: **Voûte, Magdalena Aldonse**
**Osterstrasse 120**
**D-2000 Hamburg 20(DE)**

(74) Representative: **Keppels, Willem Richard**
**Engelbertus Gerardus, Drs. et al**
**Unilever N.V. Patent Division P.O.Box 137**
**NL-3130 AC Vlaardingen(NL)**

(54) Ice confection in a package.

(57) An impervious package composed of at least two mould portions of transparent, self-supporting sheet material defining an irregularly shaped 3D mould cavity filled with frozen ice confection material. A method for manufacturing such filled packages is provided by first moulding at least two mould portions of transparent, self-supporting sheet material defining an irregularly shaped 3D mould cavity and filling the latter after uniting the portions with ice confection material.

Fig. 3.

# ICE CONFECTION IN A PACKAGE

The invention relates to an irrelularly shaped 3D ice confection in a package. "3D" in the ice confection art relates to shapes comprising protruding parts preventing their demoulding by simple withdrawal from a one-end-open rigid mould. The last few years 3D ice confection products receive a lot of attention and many fancy shapes such as fairy and strip characters and animals are moulded into ice confection material. Normally, the ready ice confection products are packed in opaque packaging material, loosely enclosing the products, such as by flow wrapping. As a result, the attractive shape is entirely hidden and becomes visible again after the consumer has bought it. Using transparent packaging material does not result in a permanent visibility because it gets dim even if anti-fogging coatings are applied.

The invention seeks to take more advantage of the attractive irregular shape of packed 3D ice confection products and also to provide a simple method for shaping and packing 3D ice confection products. The invention provides thereto an ice confection having a 3D shape in a transparent package comprising at least two mould portions of transparent, self-supporting sheet-material, defining a closed, irregular 3D mould cavity, filled with frozen ice confection material. In a preferred embodiment the mould portions are provided with outwardly extending flanges, which are united. For an easy removal of the ice-confection product the mould portions are preferably easily separable, in particular by uniting these flanges with restricted adhesion.

The invention also relates to a method for making a 3D ice confection in a package by filling ice mix into a mould having an irregular 3D mould cavity, wherein according to the invention a mould is used comprising at least two mould portions of transparent, self-supporting sheet material and the mould is closed after after filling it.

In a relatively cheap and easy embodiment thermoformed, flanged mould portions, which are united by their flanges are used.

For easy removal of the ice confection product from the package preferably easily separable mould portions are used. In order to meet this requirement usual techniques may be used such as uniting the flanges only locally or by coating the flanges with an adhesion restricting agent.

The invention will be exemplified in the following non-limiting description of an embodiment which is schematically shown in the schematic drawings.

Fig.1 shows a vacuum mould for thermoforming self-supporting thermoplastic material in cross section

Fig.2 shows two combined mould halves formed in the mould of Fig.1 in cross section

Fig.3 shows the combined mould halves of Fig.2 being filled with ice mix in side view.

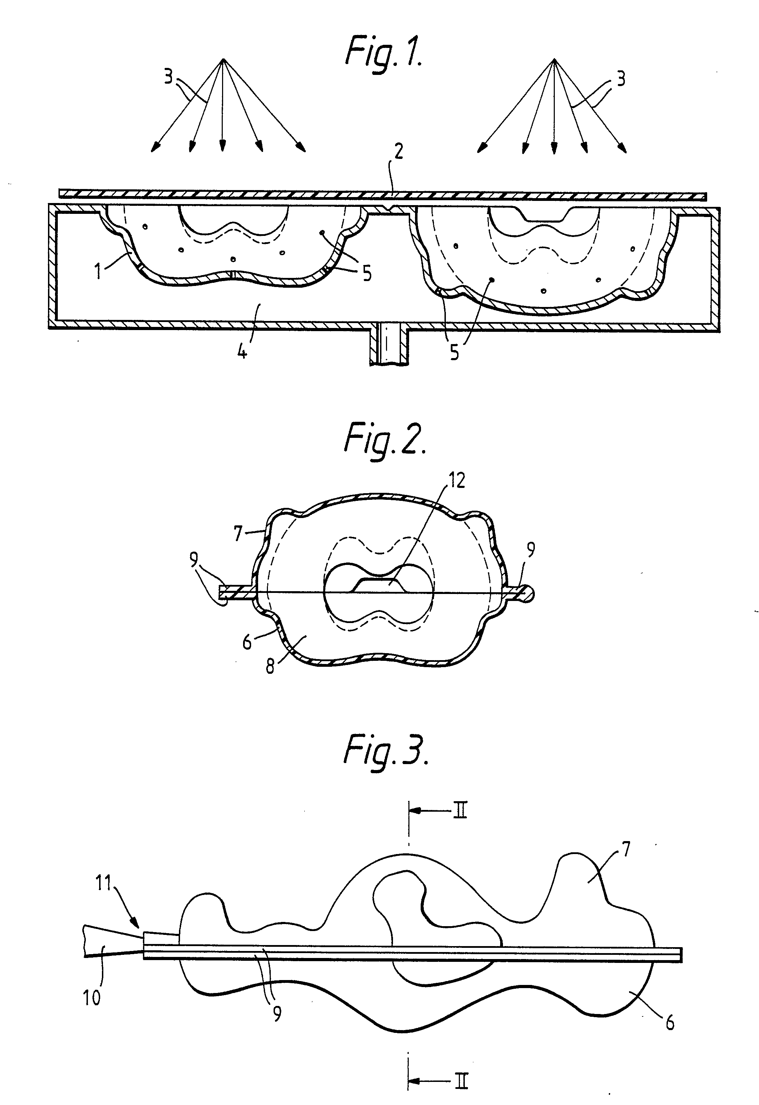

In Fig.1 a usual vacuum mould 1 for thermoforming self-supporting, i.e. for practical purposes rigid thermoplastic sheet material 2. After heating and thereby weakening the sheet 2 by a suitable heating means, represented by the arrows 3, the vacuum chamber 4 is connected to a suitable vacuum source. Tiny bores 5 in the actual vacuum mould 1 allow air to flow from between this mould 1 and the weakened sheet 2, thereby shaping the sheet in conformity to the vacuum mould.

The two transparent interlinked 3D mould portions 6,7 formed by this known process can be removed from the mould if sufficient regained rigidity prevents the mould portions from distorting.

The two mould portions 6,7 formed in this way may be combined to form a mould for shaping ice confection material by creating a hinge line between these mould portions and bending the sheet material along this line until the flanges 9 of the mould portions meet.

The flanges 9 are united by heat sealing, glueing or any other usual means. For easy re-opening the mould it is preferred that the mould portions are easily separable such as by restricting the adhesion or uniting the flanges locally only as is known in the art. Particularly in the latter case it is to be advised that the flanges are clamped against each other by suitable means during filling the mould with ice mix. The clamping action may end as soon as this mix has become sufficiently stiff to prevent it from leaking out between the flanges.

Fig. 3 shows a side view of the combined mould being filled through a filling spout 10 for ice mix inserted in a filling opening 11, formed by a suitable depression 12 in one of the flanges 9, as shown in Fig. 2. After removing the filling spout 10 from the filling opening 11, the latter is closed by any suitable means.

## Claims

1. Ice confection having an irregular 3D shape in a transparent package, comprising at least two mould portions (7) of transparent, self-supporting sheet-material defining a closed 3D mould cavity (8), filled with frozen ice confection material.

2. Ice confection in a package according to claim 1, wherein the mould portions (6,7) are united by outwardly extending flanges (9).

3. Ice confection in a package according to claim 1 or 2, wherein the mould portions are easily separable.

4. Ice confection in a package according to claim 2 or 3, wherein the flanges (9) are united with restricted adhesion.

5. A method of making a 3D ice confection in a package by filling ice mix into a mould having an irregular 3D mould cavity, wherein a mould is used comprising at least two mould portions (6,7) of transparent, self-supporting sheet material and the mould is closed after filling it.

6. A method according to claim 5, wherein thermoformed, flanged mould portions which are united by their flanges (9) are used.

7. A method according to claim 5 or 6, wherein easily separable mould portions are used.

8. A method according to claim 6, wherein the flanges (9) are united locally only.

9. A method according to claim 8, wherein the flanges are clamped against each other during filling the mould with ice mix until this mix is sufficiently stiff to prevent it from leaking out between the flanges.

Fig.1.

Fig.2.

Fig.3.